# EUROPÄISCHE PATENTSCHRIFT

(11) **EP 3 057 856 B1**
(45) Veröffentlichungstag und Bekanntmachung des Hinweises auf die Patenterteilung: **27.12.2017**
(21) Anmeldenummer: 14789539.5
(22) Anmeldetag: 09.10.2014
(51) Int. Cl.: B62D 53/08, B62D 55/08, B62D 59/02

(54) **TRANSPORTRAUPE**
TRANSPORTING CONTINUOUS TRACK
VÉHICULE DE TRANSPORT À CHENILLES

(30) Priorität: 17.10.2013 DE 102013111484
(43) Veröffentlichungstag der Anmeldung: 24.08.2016
(73) Patentinhaber: Meister, Claudia, 64807 Dieburg (DE)
(72) Erfinder: MEISTER, Jochen, Deceased (DE)
(74) Vertreter: Katscher Habermann Patentanwälte
(86) Internationale Anmeldenummer: PCT/EP2014/071703
(87) Internationale Veröffentlichungsnummer: WO 2015/055513

(56) Entgegenhaltungen:
- EP-A1- 1 686 046
- EP-A2- 0 319 765
- EP-A2- 2 052 953
- CN-U- 201 646 921
- DE-A1- 4 217 249
- US-A1- 2001 007 234
- US-A1- 2009 308 667
- US-B1- 6 641 161

## Beschreibung

Die Erfindung betrifft eine Transportraupe mit einem Fahrgestell und mit einer an dem Fahrgestell angeordneten Sattelkupplung zur Aufnahme einer Kupplungseinrichtung eines Sattelaufliegers, wobei die Sattelkupplung längs einer Querachse der Transportraupe schwenkbar gelagert an dem Fahrgestell angeordnet ist.

Solche Transportraupen weisen Kettenlaufwerke zur Übertragung der erforderlichen Antriebskräfte auf dem Untergrund auf und eignen sich auf Grund der auf diese Weise erheblich erhöhten Aufstandsfläche und verbesserten Traktion gegenüber Radfahrzeugen vor allem für den Einsatz in unwegsamen Geländen. Daher werden diese Transportraupen dazu verwendet, Sattelauflieger im unwegsamen Gelände an den jeweiligen Einsatzort zu transportieren.

Zu diesem Zweck werden die Sattelauflieger üblicherweise zunächst mit Hilfe eines herkömmlichen, radgelagerten Sattelschleppers über Straßen zu einem Übergabepunkt transportiert, ab dem der Weitertransport über unbefestigte Wege durch unwegsames Gelände erfolgen muss. An dem Übergabepunkt wird der Sattelauflieger von dem Sattelschlepper gelöst und mit Hilfe der an dem Sattelauflieger angeordneten Kupplungseinrichtung an der Sattelkupplung der Transportraupe festgelegt. Anschließend kann der Sattelauflieger mit Hilfe der Transportraupe an den jeweiligen Einsatzort transportiert werden.
Bei dem Transport durch unwegsames Gelände treten häufig auch größere Neigungen des Fahrwegs auf. Fährt die Transportraupe mit angekuppeltem Sattelauflieger von einem beispielsweise im Wesentlichen ebenen Fahrbereich in einen in Richtung einer Querachse der Transportraupe geneigten Fahrbereich ein, so wird die Transportraupe von dem sich noch auf dem im Wesentlichen ebenen Bereich befindlichen Sattelauflieger einseitig angehoben, so dass eines der Kettenlaufwerke zumindest teilweise den Kontakt zum Erdboden verliert, wodurch die Aufstandsfläche der Kettenlaufwerke einseitig verringert wird und eine Kraftübertragung zwischen der Transportraupe und dem Erdboden verringert wird. Zudem wird dadurch eine Lenkbarkeit der Transportraupe verschlechtert.
In der Druckschrift EP 2 052 953 A2 wird eine Transportraupe mit einer um eine Achse schwenkbar gelagert an dem Fahrgestell angeordneten Sattelkupplung beschrieben. Die in der Druckschrift EP 0 319 765 A2 beschriebene Kupplungseinrichtung weist eine um eine Querachse und um eine Längsachse schwenkbar gelagerte Sattelkupplung auf. Zudem sind aus der Druckschrift US 2001/007234 A1 Transportraupen mit einer längsverschiebbaren und aus der Druckschrift DE 42 17 249 A1 zusätzlich auch höhenverstellbaren Sattelkupplung bekannt. Die EP 1 686 046 A1 beschreibt eine gattungsgemäße Transportraupe. Als Aufgabe der Erfindung wird es angesehen, die aus dem Stand der Technik bekannten Transportraupen so weiterzuentwickeln, dass eine Stabilität der Transportraupe mit angekuppeltem Sattelauflieger erhöht und ein Aufschaukeln des Sattelaufliegers in unwegsamen Gelände vermieden wird.

Diese Aufgabe wird erfindungsgemäß dadurch gelöst, dass die Transportraupe eine Sensoreinrichtung, eine datenleitend mit der Sensoreinrichtung verbundene Steuerungseinrichtung und eine elektrisch mit der Steuerungseinrichtung verbundene Neigungsaktuatoreinrichtung aufweist, wobei mit der Sensoreinrichtung Neigungsparameter der Transportraupe und/oder des Sattelaufliegers erfasst werden und von der Steuerungseinrichtung gemäß eines vorgegeben Steuerungsprogramms verarbeitet werden, wobei durch das Steuerungsprogramm Steuerbefehle ermittelt werden und mit den Steuerbefehlen die Neigungsaktuatoreinrichtung angesteuert wird, so dass eine relative Neigung zwischen der Transportraupe und dem Sattelauflieger ausgeglichen wird. Bei den Neigungsparametern kann es sich beispielsweise um auf die Sattelkupplung von dem Sattelauflieger wirkende Kräfte oder um Neigungswinkel der Transportraupe und/oder des Sattelaufliegers handeln. Fährt die auf diese Weise weiterentwickelte Transportraupe von einer im Wesentlichen horizontalen Fahrbahn in einen geneigten Fahrbahnbereich ein, wird die schwenkbar gelagerte Sattelkupplung durch den Sattelauflieger entgegen der Fahrbahnneigung verschwenkt. Auf diese Weise wird ein einseitiges Anheben der Transportraupe wirkungsvoll vermieden. Dadurch wird eine ausreichende Traktion der Transportraupe auch in besonders unwegsames Gelände erreicht.

Auf Grund der üblicherweise vergleichsweise niedrigen Geschwindigkeiten der Transportraupe besteht auch keine erhöhte Schleudergefahr für den mit der schwenkbar gelagerten Sattelkupplung verbundenen Sattelauflieger.

Um die Geländegängigkeit der Transportraupe weiter zu erhöhen und ein Anheben der Transportraupe durch den Sattelauflieger auch bei Fahrbahnneigungen in einer Längsachse der Transportraupe oder in einer Schrägachse der Transportraupe zu vermeiden ist erfindungsgemäß vorgesehen, dass die Sattelkupplung frei schwenkbar gelagert an dem Fahrgestell angeordnet ist. Die Schrägachsen liegen in einer von der Längsachse und der Querachse aufgespannten Ebene. Beispielsweise ist es erfindungsgemäß möglich, die Sattelkupplung über ein Kugelgelenk schwenkbar an dem Fahrgestell anzuordnen. Auf diese Weise kann eine Fahrbahnneigung bzw. eine relative Neigung der Transportraupe im Verhältnis zu dem Sattelauflieger unabhängig von einer Ausrichtung der Neigung ausgeglichen werden.

Um mit der Transportraupe unterschiedlich ausgestaltete Sattelauflieger, deren Kupplungsvorrichtungen an unterschiedlichen Positionen angeordnet sein können, mit der Transportraupe sicher transportieren zu können ist erfindungsgemäß vorgesehen, dass die Sattelkupplung bezüglich einer Längsachse der Transportraupe längsverschiebbar an dem Fahrgestell angeordnet ist. Auf diese Weise kann eine Längsposition der Sattelkupplung an den jeweiligen Sattelauflieger einfach angepasst werden.

Es ist auch möglich und erfindungsgemäß vorgesehen, Lasten unmittelbar auf der Transportraupe anzuordnen und mit der Transportraupe zu transportieren.

Um eine möglichst ebene Ladefläche bei einer unmittelbaren Beladung der Transportraupe mit Ladegut zu ermöglichen, und einen möglichst tief liegenden Schwerpunkt der beladenen Transportraupe zu erreichen ist erfindungsgemäß vorgesehen, dass die Sattelkupplung bezüglich einer Hochachse der Transportraupe höhenverstellbar an dem Fahrgestell angeordnet ist. Auf diese Weise kann die Sattelkupplung bei Verwendung der Transportraupe als Zuggerät für einen Sattelauflieger in eine Zugposition verlagert werden. Wird Ladegut unmittelbar auf der Transportraupe angeordnet und mit Hilfe der Transportraupe transportiert, so kann die Sattelkupplung einfach aus der Zugposition in eine bezüglich des Erdbodens tiefer liegende Lagerposition verlagert werden, so dass die Sattelkupplung bei der Beladung der Transportraupe weder stört noch beschädigt wird und der Schwerpunkt der beladenen Transportraupe in Richtung des Erdbodens verlagert ist.

Zur Verlagerung der Sattelkupplung ist erfindungsgemäß vorgesehen, dass die Transportraupe eine hydraulische Hubeinrichtung aufweist, wobei die hydraulische Hubeinrichtung mit der Sattelkupplung in Wirkverbindung steht und eine Längsverschiebung und/oder eine Höhenverstellung der Sattelkupplung ermöglicht. Die Hubeinrichtung kann erfindungsgemäß beispielsweise durch eine geeignete und mit der Hubeinrichtung datenleitend verbundene Steuerungsvorrichtung angesteuert werden.

Bei einer besonders vorteilhaften Ausgestaltung der erfindungsgemäßen Transportraupe ist vorgesehen, dass die Sattelkupplung eine Feststelleinrichtung aufweist, mit der eine Neigung der Sattelkupplung festgelegt werden kann. Mit Hilfe einer derart blockierten Sattelkupplung können höhere Zuglasten über die Sattelkupplung auf die Transportraupe übertragen werden. Um dabei eine Fahrt durch unterschiedlich geneigtes Gelände zu ermöglichen ist es vorteilhaft, die Neigung der Sattelkupplung bei Bedarf anzupassen und erneut festzulegen.

Weitere vorteilhafte Ausgestaltungen der erfindungsgemäßen Transportraupe werden anhand von in der Zeichnung dargestellten Ausführungsbeispielen näher erläutert.

Es zeigt:
Fig. 1 eine schematisch dargestellte Ansicht auf eine Transportraupe auf einer geneigten Fahrbahn und einen an die Transportraupe angekuppelten Sattelauflieger auf einer horizontalen Fahrbahn,
Fig. 2 eine schematisch dargestellte Seitenansicht auf eine Transportraupe mit einer schwenkbar gelagerten Sattelkupplung,
Fig. 3a eine schematisch dargestellte Draufsicht auf eine Transportraupe mit einer schwenkbar gelagerten Sattelkupplung,
Fig. 3b eine schematisch dargestellte Vorderansicht auf die in Fig. 3a dargestellte Transportraupe,
Fig. 3c eine schematisch dargestellte Vorderansicht auf die in Fig. 3a dargestellte Transportraupe, wobei die Sattelkupplung in eine Zugposition verlagert dargestellt ist.

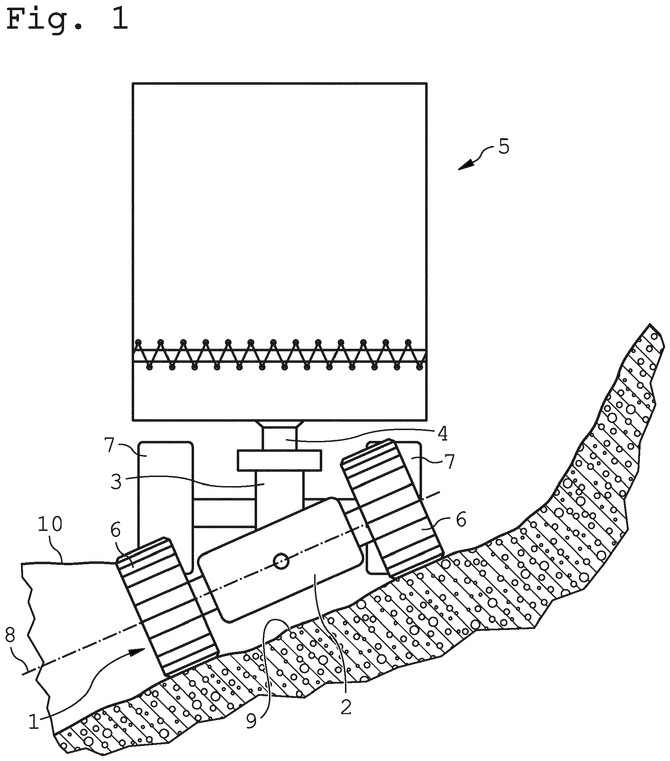

Fig. 1 zeigt schematisch eine Transportraupe 1 mit einem Fahrgestell 2 und mit einer an dem Fahrgestell 2 schwenkbar gelagert angeordneten Sattelkupplung 3 in die eine Kupplungseinrichtung 4 eines Sattelaufliegers 5 eingreift. Die Transportraupe 1 weist zwei an dem Fahrgestell 2 angeordnete Kettenlaufwerke 6 auf. Der Sattelauflieger 5 ist auf Rädern 7 gelagert.

In der in Fig. 1 dargestellten Situation befindet sich die Transportraupe 1 auf einem in Richtung einer Querachse 8 der Fahrzeugraupe 1 geneigtem Fahrbahnabschnitt 9. Der Sattelauflieger 5 befindet sich auf einem im Wesentlichen horizontal ausgerichteten Fahrbahnabschnitt 10. Diese unterschiedliche Fahrbahnneigung wird durch die schwenkbar gelagerte Sattelkupplung 3 ausgeglichen, indem die Sattelkupplung 3 entgegen der Neigungsrichtung des geneigten Fahrbahnabschnitts 9 durch die Kupplungseinrichtung 4 des Sattelaufliegers 5 verschwenkt wird. Die Sattelkupplung 3 richtet sich automatisch bezüglich der Neigung des Sattelaufliegers 5 aus und folgt dieser Ausrichtung nach. Es ist aber auch möglich und erfindungsgemäß vorgesehen, dass die Neigung der Sattelkupplung 3 durch eine Neigungsaktuatorvorrichtung aktiv verstellt wird.

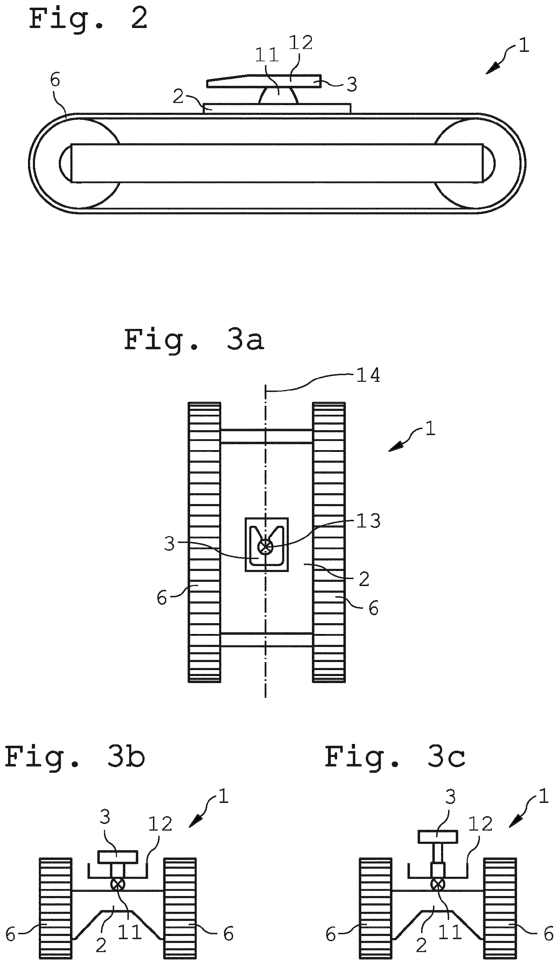

In Fig. 2 ist schematisch eine Transportraupe 1 mit einer schwenkbar gelagerten Sattelkupplung 3 dargestellt. Die Sattelkupplung 3 weist einen an einem Fahrgestell 2 der Transportraupe 1 festgelegten Gelenkkopf 11 auf, der mit einer an den Gelenkkopf 11 angepassten Gelenkpfanne 12 in Eingriff steht, so dass die Gelenkpfanne 12 frei schwenkbar auf dem Gelenkkopf 11 gelagert angeordnet ist. Die Gelenkpfanne 12 dient gleichzeitig als Sattelkupplung 3.

Fig. 3a zeigt eine schematisch dargestellte Draufsicht auf eine Transportraupe 1 mit einem Fahrgestell 2, mit zwei an dem Fahrgestell 2 angeordneten Kettenlaufwerken 6 und einer schwenkbar an dem Fahrgestell 2 gelagert angeordneten Sattelkupplung 3. Die Sattelkupplung 3 ist höhenverstellbar in Richtung einer Hochachse 13 der Transportraupe 1 und längsverstellbar in Richtung einer Längsachse 14 der Transportraupe 1 ausgestaltet.

Fig. 3b zeigt eine schematisch dargestellte Vorderansicht auf die in Fig. 3a abgebildete Transportraupe 1. Die Sattelkupplung 3 der Transportraupe 1 ist höhenverstellbar ausgestaltet. In der in der Fig. 3b dargestellten Position ist die Sattelkupplung 3 in eine Lagerposition verlagert, so dass die Transportraupe 1 unmittelbar mit nicht dargestelltem Transportgut beladen werden kann.

In Fig. 3c ist die in der Fig. 3a dargestellte Transportraupe 1 schematisch mit der in einer Zugposition verlagerten Sattelkupplung 3 dargestellt. In dieser Position kann ein nicht dargestellter Sattelauflieger an die Transportraupe 1 angekuppelt werden und von der Transportraupe 1 auch im unwegsamen Gelände transportiert werden. In der Zugposition ist die Sattelkupplung 3 frei schwenkbar gelagert, so dass bei einer Fahrt durch unwegsames Gelände Neigungsunterschiede der Fahrbahn, die sich auf die Neigung der Transportraupe 1 zu einem Sattelauflieger auswirken, durch die Sattelkupplung 3 ausgeglichen werden.

## Patentansprüche

1. Transportraupe (1) mit einem Fahrgestell (2) und mit einer an dem Fahrgestell (2) angeordneten Sattelkupplung (3) zur Aufnahme einer Kupplungseinrichtung (4) eines Sattelaufliegers (5), wobei die Sattelkupplung (3) längs einer Querachse (8) der Transportraupe (1) schwenkbar gelagert an dem Fahrgestell (2) angeordnet ist, **dadurch gekennzeichnet, dass** die Transportraupe (1) eine Sensoreinrichtung, eine datenleitend mit der Sensoreinrichtung verbundene Steuerungseinrichtung und eine elektrisch mit der Steuerungseinrichtung verbundene Neigungsaktuatoreinrichtung aufweist, wobei mit der Sensoreinrichtung Neigungsparameter der Transportraupe (1) und/oder des Sattelaufliegers (5) erfasst werden und von der Steuerungseinrichtung gemäß eines vorgegeben Steuerungsprogramms verarbeitet werden, wobei durch das Steuerungsprogramm Steuerbefehle ermittelt werden und mit den Steuerbefehlen die Neigungsaktuatoreinrichtung angesteuert wird, so dass eine relative Neigung zwischen der Transportraupe (1) und dem Sattelauflieger (5) ausgeglichen wird.

2. Transportraupe (1) gemäß Anspruch 1, **dadurch gekennzeichnet, dass** die Sattelkupplung (3) frei schwenkbar gelagert an dem Fahrgestell (2) angeordnet ist.

3. Transportraupe (1) gemäß einem der voranstehenden Ansprüche, **dadurch gekennzeichnet, dass** die Sattelkupplung (3) bezüglich einer Längsachse (14) der Transportraupe (1) längsverschiebbar an dem Fahrgestell (2) angeordnet ist.

4. Transportraupe (1) gemäß einem der voranstehenden Ansprüche, **dadurch gekennzeichnet, dass** die Sattelkupplung (3) bezüglich einer Hochachse (13) der Transportraupe (1) höhenverstellbar an dem Fahrgestell (2) angeordnet ist.

5. Transportraupe (1) gemäß Anspruch 3 oder Anspruch 4, **dadurch gekennzeichnet, dass** die Transportraupe (1) eine hydraulische Hubeinrichtung aufweist, wobei die hydraulische Hubeinrichtung mit der Sattelkupplung (3) in Wirkverbindung steht und eine Längsverschiebung und/oder eine Höhenverstellung der Sattelkupplung (3) ermöglicht.

6. Transportraupe (1) gemäß einem der voranstehenden Ansprüche, **dadurch gekennzeichnet, dass** die Sattelkupplung (3) eine Feststelleinrichtung aufweist, mit der eine Neigung der Sattelkupplung (3) festgelegt werden kann.

## Claims

1. Crawler track (1) with a chassis (2) and with a semitrailer coupling (3) arranged on the chassis (2) for accommodating a coupling device (4) of a semitrailer (5), wherein the semitrailer coupling (3) is arranged on the chassis (2)to be pivotable alongside a transverse axis (8) of the crawler track (1), **characterized in that** the crawler track (1) comprises a sensor device, a control device connected in a data-transmitting manner with the sensor device, and a tilt-actuator device electrically connected with the control device, wherein tilt parameters of the crawler track (1) and/or the semitrailer (5) are detected by the control device, and are processed by the control device according to a predetermined control program, wherein control commands are determined by the control program and the tilt-actuator device is actuated by the control commands, so that a relative tilt between the crawler track (1) and the semitrailer (5) is counterbalanced.

2. Crawler track (1) according to claim 1, **characterized in that** the semitrailer coupling (3) is arranged on the chassis (2) in a freely-pivotable manner.

3. Crawler track (1) according to one of the preceding claims, **characterized in that** the semitrailer coupling (3) is arranged on the chassis (2) in a longitudinally-displaceable manner relative to a longitudinal axis (14) of the crawler track (1).

4. Crawler track (1) according to one of the preceding claims, **characterized in that** the semitrailer coupling (3) is arranged on the chassis (2) in a manner to be height-adjustable relative to a height axis (13) of the crawler track (1).

5. Crawler track (1) according to claim 3 or claim 4, **characterized in that** the crawler track (1) comprises a hydraulic lifting device, wherein the hydraulic lifting device is in engagement with the semitrailer coupling (3) and allows a longitudinal displacement and/or a height adjustment of the semitrailer coupling (3).

6. Crawler track (1) according to one of the preceding claims, **characterized in that** the semitrailer coupling (3) comprises a locking means, with which the tilt of the semitrailer coupling (3) can be set.

## Revendications

1. Chenille de transport (1) comprenant un train de roulement (2) et comprenant une sellette d'attelage (3) disposée sur le train de roulement (2), destinée à loger un dispositif d'attelage (4) d'une semi-remorque (5), la sellette d'attelage (3) étant logée sur le train de roulement (2) de manière pivotante le long d'un axe transversal (8) de la chenille de transport (1), **caractérisée en ce que** la chenille de transport (1) présente un dispositif à capteur, un dispositif de commande relié au dispositif à capteur en transmettant des données et un dispositif d'actionneur d'inclinaison relié électriquement au dispositif de commande, des paramètres d'inclinaison de la chenille de transport (1) et/ou de la semi-remorque (5) étant détectés à l'aide du dispositif à capteur et traités par le dispositif de commande selon un programme de commande prédéfini, des instructions de commande étant déterminées au moyen du programme de commande et le dispositif d'actionneur d'inclinaison étant activé à l'aide des instructions de commande de sorte qu'une inclinaison relative entre la chenille de transport (1) et la semi-remorque (5) est compensée.

2. Chenille de transport (1) selon la revendication 1, **caractérisée en ce que** la sellette d'attelage (3) est disposée sur le train de roulement (2) en étant logée de manière librement pivotante.

3. Chenille de transport (1) selon l'une quelconque des revendications précédentes, **caractérisée en ce que** la sellette d'attelage (3), par rapport à un axe longitudinal (14) de la chenille de transport (1), est disposée de manière déplaçable en longueur sur le train de roulement (2) .

4. Chenille de transport (1) selon l'une quelconque des revendications précédentes, **caractérisée en ce que** la sellette d'attelage (3) par rapport à un axe vertical (13) de la chenille de transport (1), est disposée de manière déplaçable en hauteur sur le train de roulement (2).

5. Chenille de transport (1) selon la revendication 3 ou la revendication 4, **caractérisée en ce que** la chenille de transport (1) présente un dispositif de levage hydraulique, le dispositif de levage hydraulique étant en liaison active avec la sellette d'attelage (3) et permettant un déplacement longitudinal et/ou un réglage en hauteur de la sellette d'attelage (3).

6. Chenille de transport (1) selon l'une quelconque des revendications précédentes, **caractérisée en ce que** la sellette d'attelage (3) présente un dispositif de blocage à l'aide duquel une inclinaison de la sellette d'attelage (3) peut être bloquée.
